# EUROPEAN PATENT APPLICATION

(11) **EP 2 787 443 A1**
(43) Date of publication of application: **08.10.2014**
(21) Application number: 13305433.8
(22) Date of filing: 03.04.2013
(51) Int. Cl.: G06F 11/36

(54) **System and method of testing a software application**

(71) Applicant: Ricoh Company, Ltd., Tokyo 143-8555 (JP)
(72) Inventor: Joui, Cyril, 94513 Rungis Cedex (FR)
(74) Representative: Delumeau, François Guy

(57) **Abstract**

This system for testing a software application (S2M) comprising at least one software component (buttonOK) which is an instance of a generic model (IButton), comprises:
- means for creating a proxy (TestBT) for said software component (buttonOK), said proxy (TestBT) being an instance of said generic model (IButton) and for establishing a pointer between said proxy (TestBT) and said software component (buttonOK);
- means for obtaining a test scenario (TScen) of said software application (S2M), said scenario comprising at least one command (CMD1, CMD2) for testing said software component (buttonOK), said command comprising at least an identifier (CMPId) of said software component (buttonOK) and a type of an operation (OPType) for testing said software component (buttonOK);
- means for providing said command (CMD1, CMD2) to the proxy (TestBT) created for the software component (buttonOK);
- said proxy (TestBT) having means for delegating the execution of said operation to said software component (buttonOK);
- said proxy (TestBT) having means for obtaining a response of the execution of said operation by said software component (buttonOK) and
- means for obtaining said response from said proxy (TestBT).

## Description

### Background of the invention

The invention relates to a method of testing a software application.

It applies notably but not exclusively to a method of testing a software application designed to run on a peripheral device such as a home appliance, a printer or a multi-functional peripheral.

The invention is particularly advantageous for testing complex software applications, i.e. real-time applications comprising a huge number of software components.

In the state of the art, such complex real-time software applications are tested manually by human operators conducting a series of tests defined in a scenario which aims at covering as far as possible the whole functioning of the device.

However, such a human testing gives rise to errors and takes a lot of time.

### Object and summary of the invention

The present invention alleviates the above drawbacks.

To this end, the invention provides a method of testing a software application comprising at least one software component which is an instance of a generic model.

This method comprises the steps of:
- creating a proxy for said software component, said proxy being an instance of said generic model and establishing a pointer between said proxy and said software component;
- obtaining a test scenario of said software application, said scenario comprising at least one command for testing said software component, said command comprising at least an identifier of said software component and a type of an operation for testing said software component.

The method comprises for each command:
- providing said command to the proxy created for the software component;
- said proxy delegating the execution of said operation to said software component;
- said proxy obtaining a response of the execution of said operation by said software component and
- obtaining said response from said proxy.

Conversely, the invention concerns a system for testing a software application comprising at least one software component which is an instance of a generic model. This said system comprises:
- means for creating a proxy for said software component, this proxy being an instance of said generic model and for establishing a pointer between said proxy and said software component;
- means for obtaining a test scenario of said software application, said scenario comprising at least one command for testing said software component, said command comprising at least an identifier of said software component and a type of an operation for testing this software component;
- means for providing said command to the proxy created for the software component;
- said proxy having means for delegating the execution of said operation to said software component;
- said proxy having means for obtaining a response of the execution of said operation by said software component and
- means for obtaining said response from said proxy.

Therefore, the invention relates to a method for automatically testing a software application comprising a plurality of software components.

According to the invention, the human operations are almost restricted to the definition of the test scenario and to the analysis of the responses resulting of the tests applied to the different software components, but the tests themselves do not require any user operation.

In a particular embodiment, the method of the invention comprises a step of automatically analyzing the responses, this analysis comprising at least:
- an evaluation of the percentage of the software application which has been tested ;
- an evaluation of the usage of the memory in the peripheral device ; or
- producing statistics about command executions, such as commands execution time or results for example.

This embodiment simplifies the analysis of the responses by the human operator.

The command may also comprise other fields and in particular the identifier of a container comprising the software component. This feature enables the testing of several software objects having the same identifier but belonging to different windows.

The remote testing device may in particular be a personal computer running a graphical performance testing tool such as Apache JMeter™.

In a particular embodiment:
- the software component is a Java application;
- the proxy is a Java Class;
- the pointer between the proxy and the software component is a Java property;
- the command is described under metadata of a web service;
- the delegation of the execution of said operation being implemented by a design pattern.

Java based platform : machine-independent Java architecture.

The invention may be used in at least two different contexts. In a first context, the application software under test is executed by a peripheral device and the test scenario is run by a remote testing device connected to the peripheral device through a network.

Therefore, in a first embodiment of the invention, the software application to be tested is executed by a peripheral device connected through a network to a remote testing device. In this embodiment:
the test scenario is obtained by the remote testing device;
each command of the test scenario is sent by the remote testing device, through the network, to the destination of the proxy which is implemented in the peripheral device; and;
the response is transferred by the proxy to the remote testing device through the network.

Accordingly, the invention also concerns a system comprising a peripheral device executing the software application, the peripheral device being connected through a network to a remote testing device, wherein:
the test scenario is obtained by the remote testing device;
each command of the test scenario is sent by the remote testing device, through the network, to the destination of the proxy, this proxy being implemented in the peripheral device; and;
the response is transferred by the proxy to the remote testing device through the network.

The invention also concerns a peripheral device executing a software application and connected to a remote testing device through a network, this software application comprising at least one software component which is an instance of a generic model, said peripheral device comprising:
- a proxy pointing towards said software component, said proxy being an instance of said generic model,
- means for receiving, from said remote testing device, a command comprising at least an identifier of said software component and a type of an operation for testing said software component;
- means for providing said command to the proxy pointing toward said software component; and wherein:
- said proxy comprises
   - means for delegating the execution of said operation to said software component;
   - means for receiving a response of the execution of said command by said software component ; and
   - means for transferring said response to said remote testing device.

The network may either be a local area network or a wide area network, for example the Internet. In a particular use of the invention, a remote testing device can be used to test a plurality of peripheral devices simultaneously, which is a major improvement over the human testing methods of the prior art.

In a preferred implementation of this first embodiment, the provision of the command to the proxy comprises:
- said remote testing device sending said command to a controller of the peripheral device;
- said controller sending said command to a test server of the peripheral device;
- said test server providing said command to said proxy.

In a second embodiment of the invention, the method of testing a software application is executed in a sandbox environment. In this embodiment, the application to be tested is executed by the personal computer which executes the test scenario and not on the peripheral device. A mock up version of the software components, requiring no user input is preferably used.

### Brief description of the drawings

Other characteristics and advantages of the present invention appear from the following description made with reference to the accompanying annexes and drawings, which show an implementation having no limiting character.

In the annexes:
- Annex 1 gives an example of a method of creating a software component in accordance with the invention, in a particular implementation;
- Annex 2 gives an example of a method of creating a proxy in accordance with the invention, in a particular implementation;
- Annex 3 gives an example of a command that can be used in the invention, in a particular implementation;

In the figures:
- FIG. 1 shows a system for testing a software application in accordance with a first embodiment of the invention;
- FIG. 2 shows in the form of a flowchart the main steps of a method of testing a software application in accordance with the invention, in a particular embodiment;
- FIG. 3 illustrates a method of creating a proxy and of linking it to a software component in accordance with the invention, in a particular embodiment;
- FIG. 4 shows a test scenario that can be used the invention, in a particular embodiment;
- FIG. 5 illustrates a method of delegation that can be used in the invention, in a particular implementation; and
- FIG. 6 shows a system for testing a software application in accordance with a second embodiment of the invention.

### Detailed description of a first embodiment of the invention

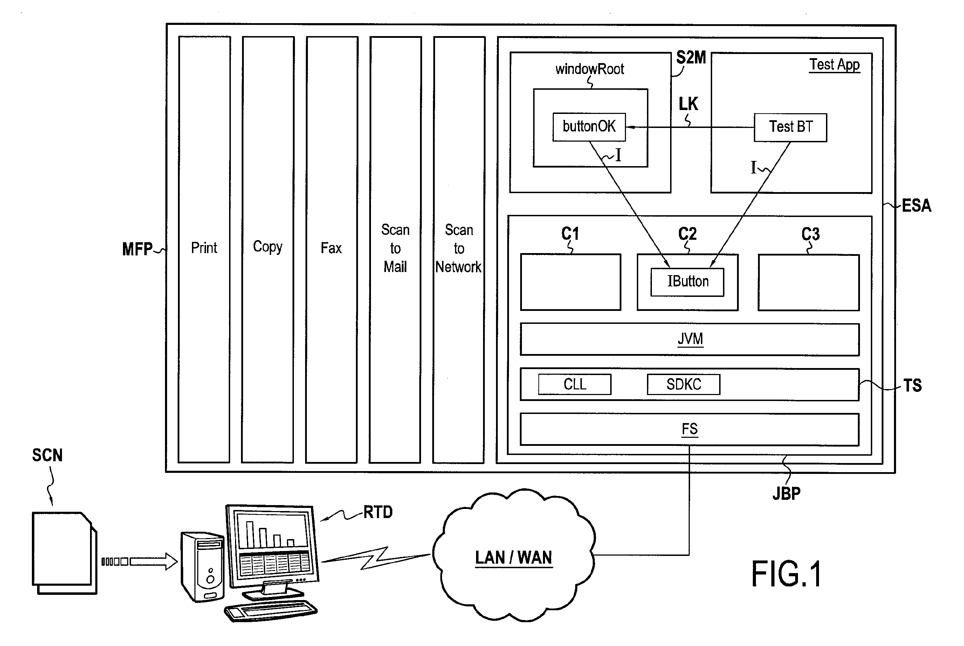

**Figure 1** represents a system according to the invention, this system comprising a peripheral device MFP according to the invention and a remote testing device RTD according to the invention, the remote testing device RTD being connected to the peripheral device through a local area network LAN.

In this example, the remote testing device RTD is a personal computer.

In this example, the peripheral device MFP is a multi-function product providing in particular print, copy, fax, scan to mail, and scan to network functions.

In this example, the peripheral device MFP implements an Embedded Software Architecture ESA comprising a Java based platform JBP.

This Java based platform JBP includes a Java Virtual Machine JVM and a plurality of Class libraries C1, C2, C3 providing networking protocols such as HTTP, FTP ... and supporting a plurality of applications.

In this example, only the test application TestApp and the scan to mail application S2M are represented in Figure 1.

In this example, the scan to mail application S2M comprises a Window container windowRoot comprising a button-type software component buttonOK.

This software component is an instance of a generic model IButton, as represented by arrow I. A method for creating the button buttonOK is given **Annex 1.**

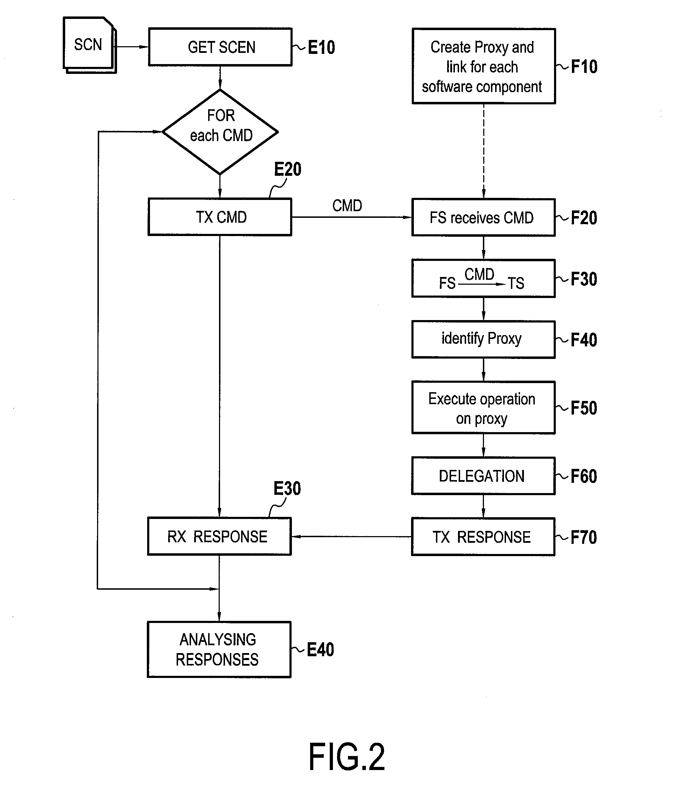

**Figure 2** represents in the form of a flow chart the main steps of a method of testing a software application according to one embodiment of the invention. In this flowchart, steps Exx are executed by the remote testing device RTD and steps Fxx are executed by the peripheral device MFP.

At step F10, the test application TestApp of the peripheral device creates a proxy for each software component to be tested using the generic model used for creating this software component. A link is established between the software component and its proxy.

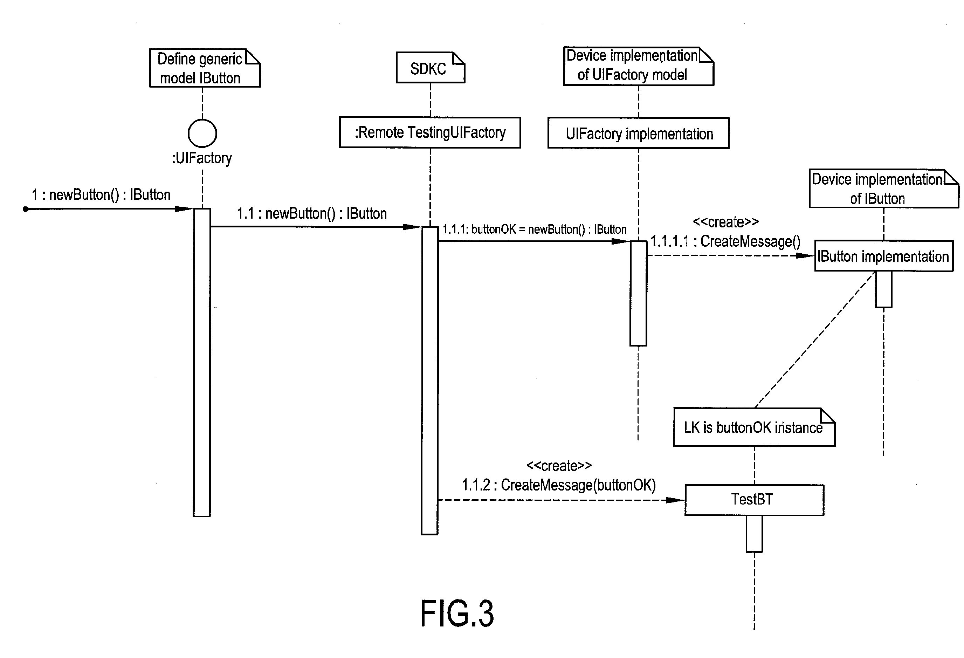

In particular, a proxy testBT is created for the buttonOK button using the generic model IButton (arrow I) and a link LK is created between the software component buttonOK and its proxy testBT (step F20). An example thereof is given in reference with **Annex 2,** and **Figure 3****.**

At figure 3, the newButton method calls the RemoteTestingUIFactoryfor creating the graphical object buttonOK. For more details on design patterns, please refer to http://en.wikipedia.org/wikijAbstract_factory_pattern.

The newButton() method calls the RemoteTestingUIFactory (step 1.1) which calls (step 1.1.1) the UIFactory Implementation newButton() method for creating the MFP implementation of the button at step 1.1.1.1..

At step 1.1.2, the RemoteTestingUIFactory, creates the TestBT proxy : buttonOK created at step 1.1.1 is here used as a parameter of this operation to establish a link vetween buttonOK and its proxy TestBT.

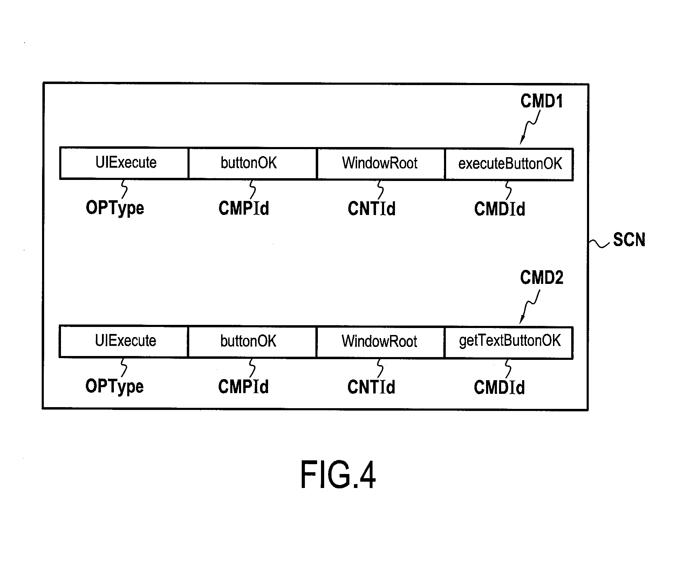

In the described embodiment, the remote testing device RTD is used for testing two different operations of the buttonOK button:
Therefore a test scenario SCN, represented at **figure 4****,** and comprising two commands CMD1, CMD2 (one for each operation to be tested) is created. In this example:
   - the first command CMD1 is used for testing the execution of the button buttonOK itself, simulating a user click ; and
   - the second command CMD2 is used for testing the getting of a text string.

In this embodiment, each command CMD1, CMD2 comprises four fields, as follows:
- An operation type OPType field : UIExecute for CMD1, UIGetValue for CMD2;
- A component identifier CMPId field: buttonOK for CMD1 and CMD2;
- A container identifier CNTId field: windowRoot for CMD1 and CMD2; and
- An optional command identifier CMDId field: executeButtonOk for CMD1, getTextButtonOk for CMD2.

Back to figure 2, the remote testing device RTD obtains the test scenario SCN at step E10.

It then executes a loop comprising steps E20 and E30 for each command CMD1, CMD2 of the scenario.

Therefore, at step E20 of the first iteration of the loop, the remote testing device RTD sends the first command CMD1 to the peripheral device MFP.

In this embodiment, the command CMD1 is received by a servlet controller FS of the Java Virtual Machine JVM of the peripheral device MFP (step F20). **Annex 3** gives an example of the sending of the CMD1 command using the HTTP protocol.

This command CMD1 is to be provided to the proxy testBT created for and linked to the software component buttonOK identified in the component identifier CMPId field of the command.

An example of method executed by the controller FS upon reception of a command is given at **Annex 4.** In this embodiment, the responsibilities of the controller FS include:
- parsing the incoming request (here HTTP)
- checking the request data (done by CommandRequestHttp object)
- executing the request
- getting the result and sending it back to client

In this specific embodiment, the controller FS forwards the command CMD1 to be executed to a test server TS of the Java Virtual Machine JVM (step F30).

At step F40, when the test server TS receives a command CMD1 to be executed, it identifies the proxy TestBT linked to the software component buttonOK identified in the component identifier field CMPId of the command.

At step F50, the test server TS delegates the operation UIExecute identified in the operation type field OPType of CMD1 to the proxy TestBT identified at step F40.

At step F60, the proxy TestBT delegates the execution of the operation UIExecute to the software component buttonOK towards which it points.

At step F70, the proxy TestBT receives a response of the execution of this operation and transfers same over HTTP to the remote testing device RTD via the test server TS (java.util.Map object) and the controller FS (java.util.Map object). In this example, the response is a string.

The remote testing device RTD receives the response at step E30.

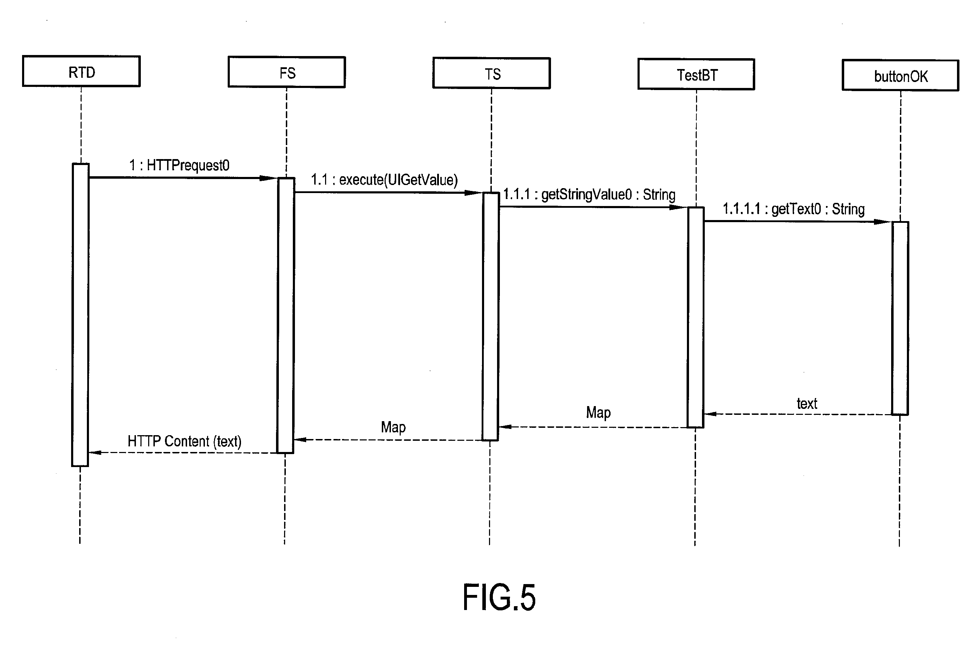

The delegation (step F60) of the execution of the operation, and the transfer of the response up to the remote testing device (step F70) is represented **Figure 5****.**

A second iteration of the loop E20-E30 is then executed for processing the second command CMD2 of the test scenario SCN.

In this embodiment, when all the commands of the test scenario SCN have been executed, the method of the invention comprises a step E40 of analyzing all the responses.

For example, this analysis may indicate the percentage of the software application code which has been tested. It may also report data relating to the usage of the memory in the peripheral device MFP or produce statistics about command executions. . In this embodiment, the test server TS is a common software layer to handle common requests and command executions. It includes a Command Listener CL and a SDK Connector SDKC.

The Command Listener receives a command from the remote testing device RTD, parses it, and forwards it to the SDK Connector.

The SDK Connector implements the command execution for a particular SDK Application. The application is simulated by the execution of the command.

The SDK Connector SDKC wraps the S2M application to be tested and makes the bridge between the controller FS and the application.

### Other embodiments of the invention

In the embodiment described above, the application under test is executed on the peripheral device MFP.

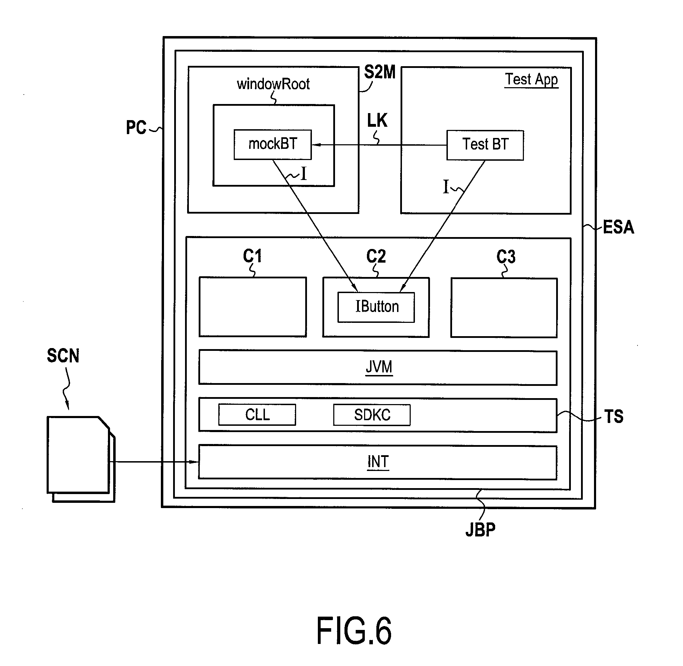

In another embodiment represented **Figure 6****,** the application may be tested in a sandbox environment (e.g. Java with an agent, in a maven plugin ....). Here, all steps E10 to E30 and F10 to F70 are executed in the memory of a testing device, for example of a Personal Computer PC. The servlet controller SV is replaced by a software module INT able to interpret the test scenario SCN.

In this scenario, the software components under to be tested are implemented without a user interface, just for testing purposes. A mock-up button mockBT is illustrated as an example.

In the embodiment described above, the remote testing device is connected to the peripheral device MFP through a local area network.

In another embodiment, the remote testing device RFD is used to test a plurality of peripheral devices simultaneously through a wide area network.

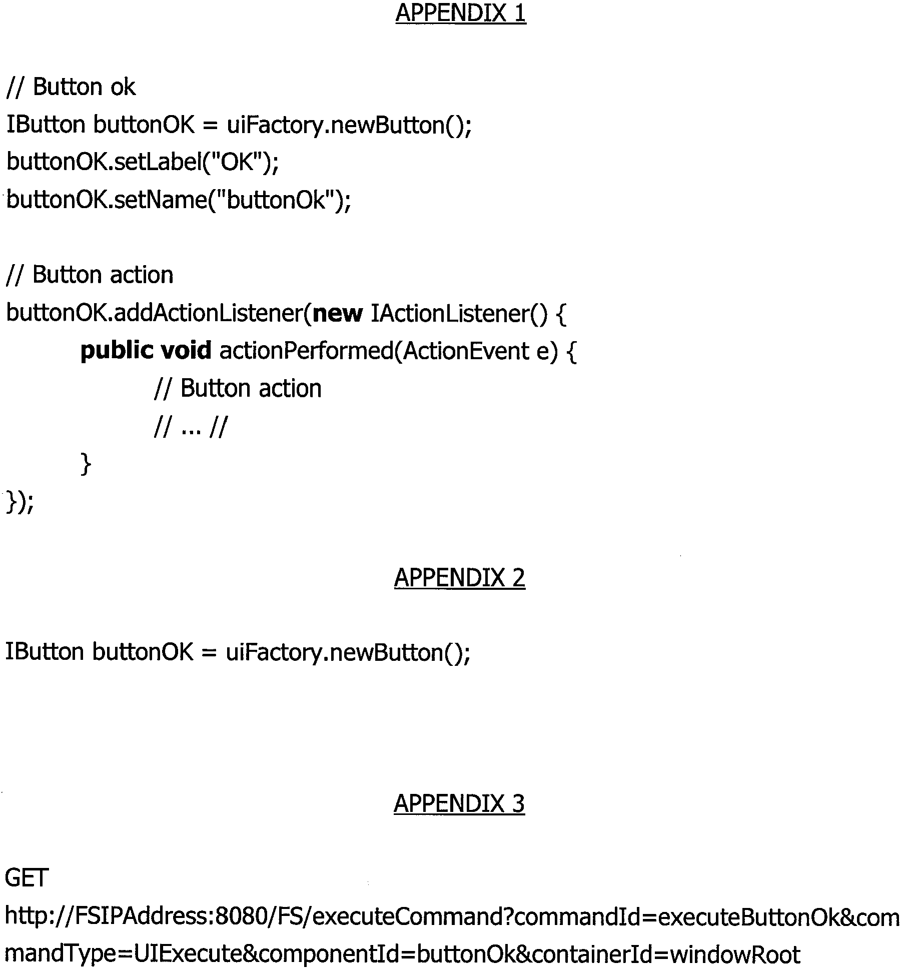

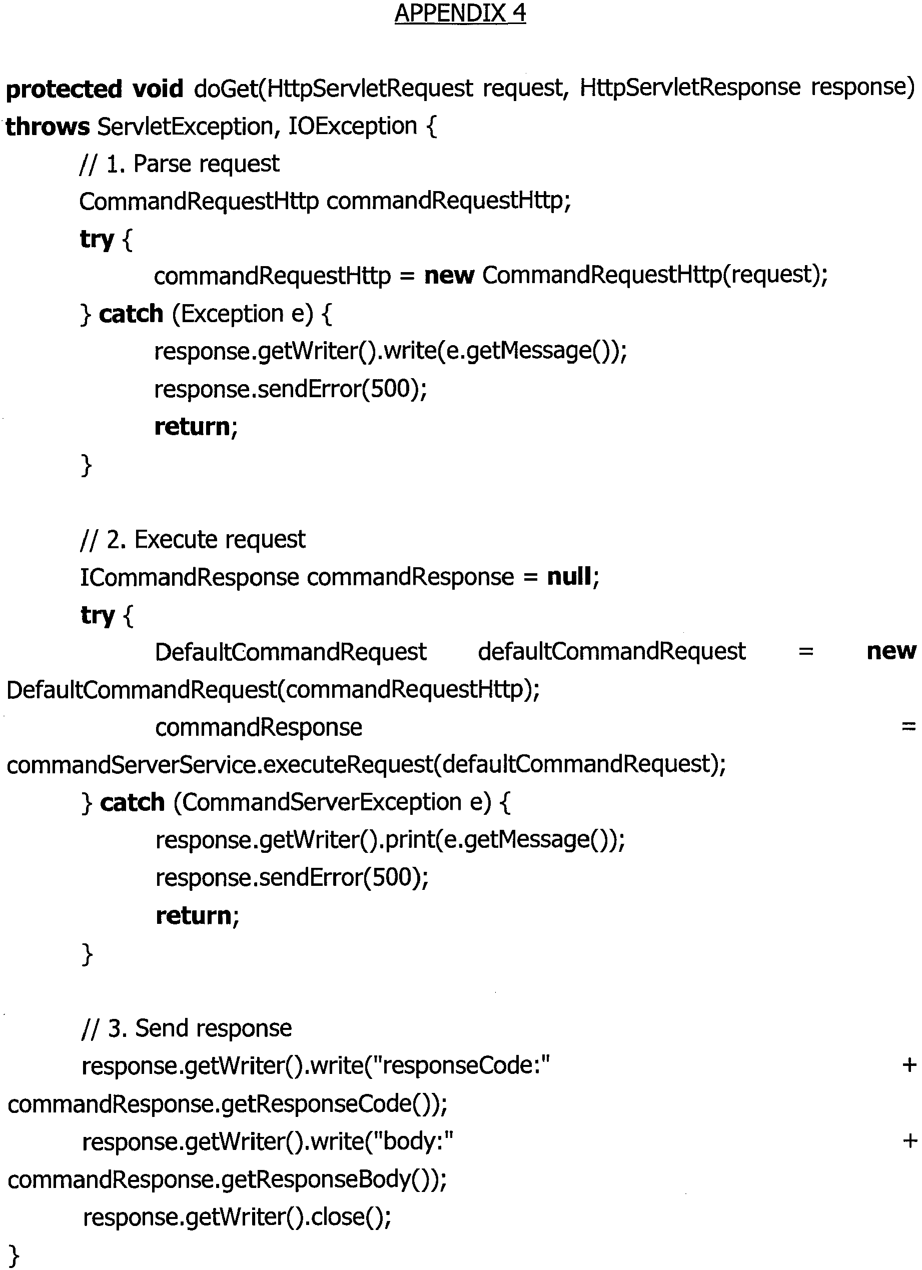

## Claims

1. A method of testing a software application (S2M) comprising at least one software component (buttonOK) which is an instance of a generic model (IButton), said method comprising the steps of:
- creating (F10) a proxy (TestBT) for said software component (buttonOK), said proxy (TestBT) being an instance of said generic model (IButton) and establishing a pointer between said proxy (TestBT) and said software component (buttonOK);
- obtaining (E10) a test scenario (TScen) of said software application (S2M), said scenario comprising at least one command (CMD1, CMD2) for testing said software component (buttonOK), said command comprising at least an identifier (CMPId) of said software component (buttonOK) and a type of an operation (OPType) for testing said software component (buttonOK);
- said method comprising for each command (CMD1, CMD2):
- providing (E20) said command (CMD1, CMD2) to the proxy (TestBT) created for the software component (buttonOK);
- said proxy (TestBT) delegating (F50) the execution of said operation to said software component (buttonOK);
- said proxy (TestBT) obtaining a response of the execution of said operation by said software component (buttonOK) and
- obtaining (F70) said response from said proxy (TestBT).

2. A method of testing a software application (S2M) according to Claim 1, wherein said software application to be tested is executed by a peripheral device (MFP) connected through a network (LAN, WAN) to a remote testing device (RTD), **characterized in that**:
said test scenario (TScen) is obtained (F10) by said remote testing device (RTD);
each command (CMD1, CMD2) of said test scenario (TScen) is sent by the remote testing device (RTD), through the network, to the destination of said proxy (TestBT) implemented in said peripheral device (MFP); and;
said response is transferred by said proxy (TestBt) to said remote testing device (RDT) through said network.

3. A method of testing a software application (S2M) according to Claim 2, **characterized in that** the provision of said command (CMD1) to said proxy (TestBT) comprises:
- said remote testing device (RTD) sending said command (CMD1) to a controller (FS) of said peripheral device (MFP);
- said controller (FS) sending said command (CMD1) to a test server (TS) of said peripheral device (MFP);
- said test server (TS) providing said command (CMD1) to said proxy (TestBT).

4. A method of testing a software application (S2M) according to Claim 1, **characterized in that** it is executed in a sandbox environment (RTD).

5. A method of testing a software application (S2M) according any one of Claims 1 to 4, **characterized in that** said command (CMD1) comprises the identifier (windowRoot) of a container comprising said software component (buttonOK).

6. A method of testing a software application (S2M) according to any one of Claims 1 to 5, **characterized in that**:
- said software component (buttonOK) is a Java application;
- said proxy (TestBT) is a Java Class;
- said pointer between said proxy (TestBT) and said software component (buttonOK) is a Java property;
- said command (CMD1) being described under metadata of a web service;
- the delegation of the execution of said operation being implemented by a design pattern.

7. A method of testing a software application according to any one of Claims 1 to 6 comprising a step (E40) of analyzing said responses, said analysis comprising at least:
- an evaluation of the percentage of the software application which has been tested ;
- an evaluation of the usage of the memory in said peripheral device (MFP); or
- producing statistics about command executions;

8. A system for testing a software application (S2M) comprising at least one software component (buttonOK) which is an instance of a generic model (IButton), said system comprising:
- means for creating a proxy (TestBT) for said software component (buttonOK), said proxy (TestBT) being an instance of said generic model (IButton) and for establishing a pointer between said proxy (TestBT) and said software component (buttonOK);
- means for obtaining a test scenario (TScen) of said software application (S2M), said scenario comprising at least one command (CMD1, CMD2) for testing said software component (buttonOK), said command comprising at least an identifier (CMPId) of said software component (buttonOK) and a type of an operation (OPType) for testing said software component (buttonOK);
- means for providing said command (CMD1, CMD2) to the proxy (TestBT) created for the software component (buttonOK);
- said proxy (TestBT) having means for delegating the execution of said operation to said software component (buttonOK);
- said proxy (TestBT) having means for obtaining a response of the execution of said operation by said software component (buttonOK) and
- means for obtaining said response from said proxy (TestBT).

9. A system according to Claim 8 comprising a peripheral device (MFP) executing said software application (S2M), said peripheral device being connected through a network (LAN, WAN) to a remote testing device (RTD), **characterized in that**:
said test scenario (TScen) is obtained (F10) by said remote testing device (RTD);
each command (CMD1, CMD2) of said test scenario (TScen) is sent by the remote testing device (RTD), through the network, to the destination of said proxy (TestBT) implemented in said peripheral device (MFP); and;
said response is transferred by said proxy (TestBt) to said remote testing device (RDT) through said network.

10. A peripheral device (MFP) executing a software application (S2M) and connected to a remote testing device (RTD) through a network (LAN), said software application (S2M) comprising at least one software component (buttonOK) which is an instance of a generic model (IButton), said peripheral device being **characterized in that** it comprises:
- a proxy (TestBT) pointing towards said software component (buttonOK), said proxy (TestBT) being an instance of said generic model (IButton),
- means for receiving, from said remote testing device (PC), a command comprising at least an identifier (CMPId) of said software component (buttonOK) and a type of an operation for testing said software component (buttonOK);
- means for providing said command (CMD1) to the proxy (TestBT) pointing toward said software component (buttonOK); and wherein:
- said proxy (TestBT) comprises
- means for delegating the execution of said operation to said software component (buttonOK);
- means for receiving a response of the execution of said command by said software component (buttonOK) ; and
- means for transferring said response to said remote testing device (RTD)
